# FASCICULE DE BREVET EUROPEEN

(11) **EP 3 697 194 B1**
(45) Date de publication et mention de la délivrance du brevet: **16.06.2021**
(21) Numéro de dépôt: 18796708.8
(22) Date de dépôt: 02.10.2018
(51) Int. Cl.: A01D 34/68

(54) **BOITIER DE TRANSMISSION ET ENGIN ROULANT ÉQUIPÉ D'UN TEL BOITIER**
GETRIEBE UND RADFAHRZEUG MIT EINEM SOLCHEN GETRIEBE
GEARBOX AND WHEELED VEHICLE PROVIDED WITH SUCH A GEARBOX

(30) Priorité: 16.10.2017 FR 1759650
(43) Date de publication de la demande: 26.08.2020
(73) Titulaire: France Reducteurs, 85500 Les Herbiers (FR)
(72) Inventeur: TEILLET, Emmanuel, 85700 Les Chatelliers Chateaumur (FR); MORAND, Damien, 85250 Chavagnes en Paillers (FR)
(74) Mandataire: Ipsilon
(86) Numéro de dépôt international: PCT/FR2018/052420
(87) Numéro de publication internationale: WO 2019/077220

(56) Documents cités:
- EP-A1- 0 782 820
- CN-Y- 2 499 262
- US-A1- 2006 060 017

## Description

### DOMAINE DE L'INVENTION

L'invention concerne un boîtier de transmission et un engin roulant équipé d'un tel boîtier.

Elle concerne plus particulièrement un boîtier de transmission comprenant un corps de boîtier délimitant une enceinte, un arbre d'entrée, un arbre de sortie, un mécanisme de transmission du mouvement de l'arbre d'entrée à l'arbre de sortie, ce mécanisme de transmission comprenant au moins un embrayage, et un dispositif de commande d'embrayage, l'arbre d'entrée, l'arbre de sortie et le mécanisme de transmission du mouvement de l'arbre d'entrée à l'arbre de sortie étant logés au moins partiellement à l'intérieur de l'enceinte du corps de boîtier, l'embrayage comprenant un élément menant et un élément mené monté solidaire en rotation de l'arbre de sortie et limité en déplacement axial suivant au moins une direction le long de l'arbre de sortie, le dispositif de commande d'embrayage comprenant un organe de commande en rapprochement de l'élément menant et de l'élément mené pour le passage de l'embrayage de la position débrayée à la position embrayée.

### ART ANTÉRIEUR

Un boîtier de transmission du type précité est connu, par exemple du document US 2006/060017 A1. Généralement, l'élément mené est rapproché de l'élément menant à l'aide d'un organe de commande logé à l'intérieur du boîtier. Cet organe de commande est généralement constitué par une fourchette qui est commandée en déplacement angulaire à l'aide d'un levier pivotant sur le boîtier.

### BUTS ET RÉSUMÉ

Un but de l'invention est de proposer un boîtier de transmission de conception simplifiée.

Un autre but de l'invention est de proposer un boîtier de transmission dont la conception permet de s'affranchir d'un organe de commande d'embrayage disposé à l'intérieur du boîtier.

À cet effet, l'invention a pour objet un boîtier de transmission comprenant :
- un corps de boîtier délimitant une enceinte,
- un arbre d'entrée,
- un arbre de sortie,
- un mécanisme de transmission du mouvement de l'arbre d'entrée à l'arbre de sortie, ce mécanisme de transmission du mouvement comprenant au moins un embrayage, et
- un dispositif de commande d'embrayage,
l'arbre d'entrée, l'arbre de sortie et le mécanisme de transmission du mouvement de l'arbre d'entrée à l'arbre de sortie étant logés au moins partiellement à l'intérieur de l'enceinte du corps de boîtier, l'embrayage comprenant un élément menant et un élément mené monté solidaire en rotation de l'arbre de sortie et limité en déplacement axial suivant au moins une direction le long de l'arbre de sortie, le dispositif de commande d'embrayage comprenant un organe de commande en rapprochement de l'élément menant et de l'élément mené pour le passage de l'embrayage de la position débrayée à la position embrayée, caractérisé en ce que l'organe de commande en rapprochement de l'élément menant et de l'élément mené pour le passage de l'embrayage de la position débrayée à la position embrayée est formé par le corps de boîtier monté déplaçable à coulissement le long de l'arbre de sortie.

L'utilisation du corps de boîtier comme organe d'embrayage permet de s'affranchir d'un organe de commande d'embrayage disposé à l'intérieur du boîtier et généralement composé au minimum d'un levier, d'une fourchette et d'un joint d'étanchéité entre levier et boîtier. Il en résulte une réduction du nombre de pièces, et par suite, une simplification du boîtier de transmission.

Selon un mode de réalisation de l'invention, le corps de boîtier est configuré pour, au cours de son déplacement à coulissement le long de l'arbre de sortie suivant une direction correspondant au passage de l'embrayage de la position débrayée à la position embrayée, entraîner en déplacement l'élément menant dans le sens d'un rapprochement de l'élément mené.

Selon un mode de réalisation de l'invention, l'embrayage comprend des moyens de rappel de l'élément menant et de l'élément mené dans le sens d'un écartement l'un de l'autre, et le corps de boîtier est configuré pour, au cours de son déplacement à coulissement le long de l'arbre de sortie suivant une direction correspondant au passage de l'embrayage de la position débrayée à la position embrayée, entraîner en déplacement l'élément menant dans le sens d'un rapprochement de l'élément mené, à l'encontre des moyens de rappel.

Selon un mode de réalisation de l'invention, le dispositif de commande d'embrayage comprend un organe de manœuvre de l'organe de commande en rapprochement de l'élément menant et de l'élément mené couplable au corps de boîtier, et le corps de boîtier formant l'organe de commande en rapprochement de l'élément menant et de l'élément mené est déplaçable à coulissement le long de l'arbre de sortie suivant une direction correspondant au passage de l'embrayage de la position débrayée à la position embrayée sous l'action d'une traction ou d'une poussée exercée sur ledit organe de manœuvre, à l'état couplé de l'organe de manœuvre au corps de boîtier.

Selon un mode de réalisation de l'invention, l'élément mené de l'embrayage comprend une partie active d'embrayage et un manchon qui porte la partie active d'embrayage, la partie active d'embrayage étant en contact d'appui avec l'élément menant de l'embrayage en position embrayée de l'embrayage, le manchon étant coaxial à l'arbre de sortie et solidaire en rotation de l'arbre de sortie, et l'élément menant étant monté déplaçable à coulissement le long du manchon.

Selon un mode de réalisation de l'invention, le manchon et la partie active d'embrayage sont réalisés d'une seule pièce.

Selon un mode de réalisation de l'invention, le manchon est intérieurement rainuré longitudinalement, et est monté solidaire en rotation de l'arbre de sortie par l'intermédiaire d'au moins un organe de liaison monté, de préférence de manière amovible sur l'arbre de sortie, cet organe de liaison faisant saillie radialement dudit arbre de sortie, chaque partie radiale externe à l'arbre de sortie dudit organe de liaison s'insérant à coulissement dans une rainure longitudinale interne du manchon.

Selon un mode de réalisation de l'invention, le manchon est muni d'un épaulement circonférentiel interne positionnable en contact d'appui contre chaque partie radiale externe à l'arbre de sortie dudit organe de liaison à l'état monté du manchon sur l'arbre de sortie, chaque partie radiale externe à l'arbre de sortie dudit organe de liaison formant une butée axiale de limitation en déplacement du manchon le long dudit arbre de sortie dans le sens d'un écartement de la partie active d'embrayage du manchon de l'élément menant.

Selon un mode de réalisation de l'invention, le manchon fait partiellement saillie du corps de boîtier, à l'état monté du manchon sur l'arbre de sortie.

Selon un mode de réalisation de l'invention, l'élément menant de l'embrayage est un élément rotatif apte à être entraîné en rotation par l'arbre d'entrée, cet élément menant de l'embrayage étant monté libre en rotation par rapport à l'arbre de sortie en position débrayée de l'embrayage.

Selon un mode de réalisation de l'invention, l'embrayage est un embrayage non progressif, de préférence à crabotage, ou un embrayage progressif, de préférence à cônes ou à disques.

L'invention a encore pour objet un engin roulant comprenant un moteur, un boîtier de transmission comprenant un corps de boîtier délimitant une enceinte, et logés au moins partiellement à l'intérieur de l'enceinte de boîtier, un arbre d'entrée, un arbre de sortie d'entrainement des roues de l'engin et un mécanisme de transmission du mouvement de l'arbre d'entrée à l'arbre de sortie, le mécanisme de transmission de mouvement comprenant au moins un embrayage, l'embrayage comprenant un élément menant mobile et un élément mené monté solidaire en rotation de l'arbre de sortie et limité en déplacement axial suivant au moins une direction le long de l'arbre de sortie, ledit boîtier comprenant en outre un dispositif de commande d'embrayage, le dispositif de commande d'embrayage comprenant un organe de commande en rapprochement de l'élément menant et de l'élément mené pour le passage de l'embrayage de la position débrayée à la position embrayée, ledit engin roulant comprenant en outre des moyens de transmission sans fin entre le moteur et l'arbre d'entrée du boîtier de transmission caractérisé en ce que le boîtier est du type précité.

Selon un mode de réalisation de l'invention, les moyens de transmission sans fin comprennent une transmission sans fin à courroie entre une poulie motrice montée sur le moteur et une poulie menée portée par l'arbre d'entrée du boîtier de transmission et le corps de boîtier est monté oscillant autour de l'arbre de sortie dans le sens d'une tension, ou respectivement d'un relâchement de la courroie de la transmission.

### BRÈVE DESCRIPTION DES FIGURES

L'invention sera bien comprise à la lecture de la description suivante d'exemples de réalisation, en référence aux dessins annexés dans lesquels :
- La figure 1 représente une vue schématique d'un engin équipé d'un boîtier de transmission conforme à l'invention.
- La figure 2 représente, sous forme de trois vues parallèles schématiques de dessus d'un engin, le passage de la position débrayée à la position embrayée.
- La figure 3 représente une vue en position éclatée des éléments le constituant d'un boîtier de transmission conforme à l'invention.
- La figure 4 représente une vue partielle en perspective d'un boîtier de transmission conforme à l'invention et de la transmission sans fin entre le moteur de l'engin et l'arbre de sortie d'entraînement des roues de l'engin dudit boîtier.
- La figure 5 représente une vue en coupe d'un boîtier de transmission à l'état monté de l'arbre de sortie sur le châssis d'un engin, en position débrayée de l'embrayage du boîtier de transmission.
- La figure 6 représente une vue en coupe d'un boîtier de transmission, à l'état monté de l'arbre de sortie sur le châssis d'un engin, en position embrayée de l'embrayage du boîtier de transmission.
- Les figures 7a et 7b représentent, sous forme de vues schématiques, un boîtier de transmission équipé d'un embrayage à cônes et le passage dudit embrayage de la position débrayée (figure 7a) à la position embrayée (figure 7b).
- Les figures 8a et 8b représentent, sous forme de vues schématiques, un boîtier de transmission équipé d'un embrayage à disques et le passage dudit embrayage de la position débrayée (figure 8a) à la position embrayée (figure 8b).
- Les figures 9a et 9b représentent, sous forme de vues en coupe, un boîtier de transmission équipé d'un embrayage en position débrayée (figure 9a) et en position embrayée (figure 9b).

### DESCRIPTION DÉTAILLÉE

Comme mentionné ci-dessus, l'invention concerne un boîtier 1 de transmission destiné à être installé sur un engin 20 roulant pour permettre l'entraînement en rotation des roues de l'engin 20 à partir du moteur 21 équipant ledit engin.

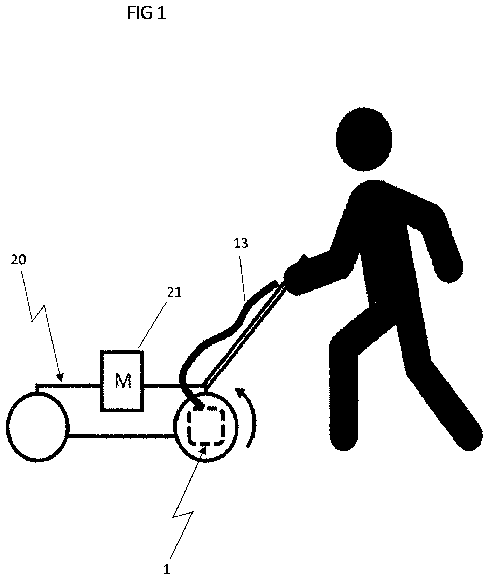

Le boîtier 1 de transmission est donc généralement disposé sur l'arbre d'entraînement en rotation des roues de l'engin, comme représenté à la figure 1, cet arbre étant appelé, dans ce qui suit, l'arbre 3 de sortie du boîtier 1 de transmission.

L'engin 20 roulant est ici une tondeuse à gazon, mais l'invention peut s'appliquer à d'autres types d'engins roulants, notamment à conducteur marchant derrière l'engin 20.

Le boîtier 1 de transmission comprend un corps 1A de boîtier délimitant une enceinte 1B. Ce corps 1A de boîtier est, dans l'exemple représenté, formé de deux coquilles assemblées entre elles. La zone d'assemblage au niveau de laquelle les coquilles sont assemblées entre elles par collage et/ou vissage ou autres est appelée plan de joint.

Ce boîtier 1 de transmission comprend encore un arbre 2 d'entrée logé partiellement à l'intérieur de l'enceinte 1B du corps 1A de boîtier. À cet effet, une ouverture est ménagée dans le corps 1A du boîtier 1 de transmission.

Le boîtier 1 de transmission comprend encore, comme mentionné ci-dessus, un arbre 3 de sortie, également logé partiellement à l'intérieur du corps 1A de boîtier de transmission. Cet arbre 3 de sortie peut faire saillie du corps 1A de boîtier à travers une ou deux ouvertures ménagées dans le corps 1A de boîtier. Dans l'exemple représenté, l'arbre 3 de sortie traverse le corps 1A de boîtier et fait saillie du corps 1A de boîtier à travers deux ouvertures représentées en 1C aux figures.

Le boîtier 1 de transmission comprend encore un mécanisme 4 de transmission de mouvement de l'arbre 2 d'entrée, qui est un arbre rotatif, à l'arbre 3 de sortie. L'arbre 2 d'entrée est lui-même entraîné en rotation par l'intermédiaire de moyens 22 de transmission sans fin. Ces moyens 22 de transmission sans fin comprennent une transmission sans fin à courroie 23 qui est disposée entre une poulie 24 motrice montée sur le moteur 21, en particulier sur l'arbre moteur 211 dudit moteur 21, et une poulie 25 portée par l'arbre 2 d'entrée du boîtier 1 de transmission.

La transmission de mouvement de rotation de l'arbre 2 d'entrée à l'arbre 3 de sortie s'opère à l'aide d'un mécanisme 4 de transmission de mouvement qui est logé à l'intérieur de l'enceinte 1B du boîtier 1 de transmission, et qui comprend au moins un embrayage 5.

Enfin, le boîtier 1 de transmission comprend un dispositif 10 de commande de l'embrayage 5 pour le passage de l'embrayage 5 de la position débrayée à la position embrayée.

L'embrayage 5 comprend un élément 6 menant et un élément 7 mené. L'élément 7 mené est monté solidaire en rotation de l'arbre 3 de sortie. Cet élément 7 mené est limité en déplacement suivant au moins une direction, à savoir dans le sens d'un écartement de l'élément 6 menant, le long de l'arbre 3 de sortie.

Le dispositif 10 de commande d'embrayage comprend quant à lui un organe 11 de commande en rapprochement de l'élément 6 menant et de l'élément 7 mené pour le passage de l'embrayage 5 de la position débrayée à la position embrayée.

De manière caractéristique à l'invention, cet organe 11 de commande en rapprochement de l'élément 6 menant et de l'élément 7 mené pour le passage de l'embrayage 5 de la position débrayée à la position embrayée est formé par le corps 1A de boîtier monté déplaçable à coulissement le long de l'arbre 3 de sortie.

Dans les exemples représentés, l'embrayage 5 comprend des moyens 12 de rappel de l'élément 6 menant et de l'élément 7 mené dans le sens d'un écartement l'un de l'autre, et le corps 1A de boîtier est configuré pour, au cours de son déplacement à coulissement le long de l'arbre 3 de sortie suivant une direction correspondant au passage de l'embrayage 5 de la position débrayée à la position embrayée, entraîner en déplacement l'élément 6 menant dans le sens d'un rapprochement de l'élément 7 mené à l'encontre des moyens 12 de rappel. Ces moyens 12 de rappel sont formés par un ressort 121 hélicoïdal qui peut être disposé entre l'élément menant 6 et l'élément mené 7 ou entre l'élément mené 7 et le corps 1A du boîtier.

Pour permettre un tel déplacement à coulissement du corps 1A de boîtier le long de l'arbre 3 de sortie, le dispositif 10 de commande d'embrayage 5 comprend un organe 13 de manœuvre de l'organe 11 de commande en rapprochement de l'élément 6 menant et de l'élément 7 mené couplable au corps 1A de boîtier, et le corps 1A de boîtier formant l'organe 11 de commande en rapprochement de l'élément 6 menant et de l'élément 7 mené est déplaçable à coulissement le long de l'arbre 3 de sortie suivant une direction correspondant au passage de l'embrayage 5 de la position débrayée à la position embrayée sous l'action d'une traction ou d'une poussée exercée sur ledit organe 13 de manœuvre, à l'état couplé de l'organe 13 de manœuvre au corps 1A de boîtier.

Cet organe 13 de manœuvre peut affecter un grand nombre de formes. Dans l'exemple représenté, cet organe 13 de manœuvre est un ensemble formé d'un câble et d'une gaine. Une patte disposée sur le corps 1A de boîtier couple cet ensemble au corps 1A de boîtier.

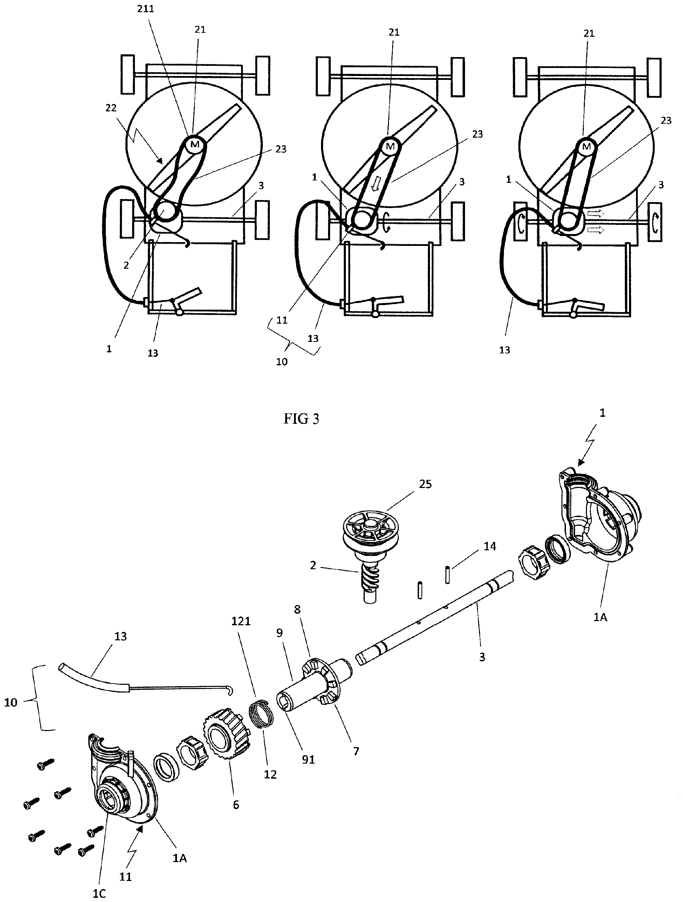

Dans l'exemple représenté, la gaine est couplée à une extrémité au corps 1A de boîtier et à son autre extrémité, au châssis de l'engin 20. Le câble est quant à lui fixé à une extrémité au châssis de l'engin 20 et à son autre extrémité au guidon de l'engin, via un levier pivotant actionnable par le conducteur de l'engin. L'actionnement de ce levier génère une traction sur le câble, et par suite, une déformation de la gaine, ce qui entraîne au moins un déplacement à coulissement du corps 1A de boîtier le long de l'arbre de sortie, comme illustré aux deux derniers schémas de la figure 2.

Bien évidemment, d'autres modes de réalisation de cet organe de manœuvre peuvent être envisagés sans sortir du cadre de l'invention.

Ainsi, l'ensemble câble/gaine aurait pu être remplacé par une tige de manœuvre, par un câble directement fixé au corps 1A de boîtier, ou autres.

Dans l'exemple représenté à la figure 2, le corps 1A de boîtier est en outre monté oscillant autour de l'arbre 3 de sortie, dans le sens d'une tension ou d'un relâchement de la courroie 23 de transmission. L'organe 13 de manœuvre peut donc être utilisé d'une part pour, dans un premier temps, provoquer par oscillation du corps 1A de boîtier autour de l'arbre 3 de sortie, la tension de la courroie 23 de la transmission sans fin entre le moteur 21 et l'arbre 2 d'entrée, puis dans un deuxième temps, le déplacement à coulissement du corps 1A de boîtier le long de l'arbre 3 de sortie. Ce mouvement oscillant peut être supprimé lorsque l'organe 13 de manœuvre ne commande qu'un déplacement à coulissement du corps 1A de boîtier le long de l'arbre 3 de sortie, la courroie 23 étant soit tendue de manière permanente, soit tendue par un autre moyen.

L'embrayage 5 du mécanisme 4 de transmission de mouvement peut affecter un grand nombre de formes. Comme mentionné ci-dessus, l'élément menant de cet embrayage 5 est un élément rotatif, apte à être entraîné en rotation par l'arbre 2 d'entrée. Cet élément 6 menant de l'embrayage 5 est monté libre à rotation par rapport à l'arbre 3 de sortie, en position débrayée de l'embrayage 5. Cet élément 6 menant peut être réalisé d'une seule pièce ou sous forme d'un ensemble monobloc avec l'arbre 2 d'entrée. Cet élément 6 menant peut également être réalisé de manière distincte de l'arbre 2 d'entrée.

L'embrayage 5 peut être un embrayage 5 non progressif, tel qu'un embrayage par crabotage, ou un embrayage progressif, tel qu'un embrayage à cônes ou à disques.

L'élément 7 mené de l'embrayage 5 est monté solidaire en rotation de l'arbre 3 de sortie et est limité en déplacement axial le long de l'arbre 3 de sortie, dans le sens d'un écartement de l'élément 6 menant.

Le corps 1A de boîtier est déplacé par l'organe 13 de manœuvre et entraîne, au cours de son déplacement, l'élément 6 menant dans le sens d'un rapprochement de l'élément 7 mené.

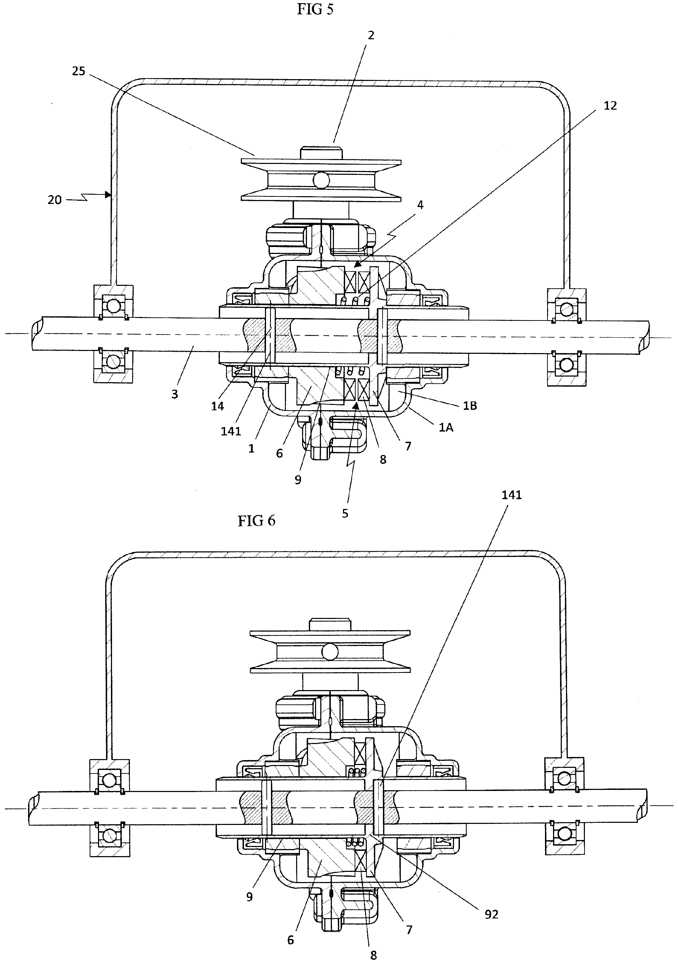

Dans l'exemple représenté aux figures 5 et 6, l'élément 7 mené de l'embrayage 5 comprend une partie 8 active d'embrayage et un manchon 9 qui porte la partie 8 active d'embrayage, la partie 8 active d'embrayage étant en contact d'appui avec l'élément 6 menant de l'embrayage 5 en position embrayée de l'embrayage 5, le manchon 9 étant coaxial à l'arbre 3 de sortie et solidaire en rotation de l'arbre 3 de sortie et l'élément 6 menant étant monté déplaçable à coulissement le long du manchon 9 dans le sens d'un rapprochement de l'élément mené, sous l'action d'un déplacement à coulissement du corps 1A de boîtier le long de l'arbre 3 de sortie.

Dans l'exemple représenté aux figures 5 à 8b, le manchon 9 et la partie 8 active d'embrayage sont réalisés d'une seule pièce. Le manchon 9 est intérieurement, rainuré longitudinalement, et est monté solidaire en rotation de l'arbre 3 de sortie par l'intermédiaire d'au moins un organe 14 de liaison monté, de préférence, de manière amovible sur l'arbre 3 de sortie, cet organe 14 de liaison faisant saillie radialement dudit arbre 3 de sortie. Chaque partie 141 radiale externe à l'arbre 3 de sortie dudit organe 14 de liaison s'insère à coulissement dans une rainure 91 longitudinale interne du manchon 9. Le manchon 9 est muni d'un épaulement 92 circonférentiel interne positionnable en contact d'appui contre chaque partie 141 radiale externe à l'arbre 3 de sortie dudit organe 14 de liaison à l'état monté du manchon 9 sur l'arbre 3 de sortie. Chaque partie 141 radiale externe à l'arbre 3 de sortie dudit organe 14 de liaison forme une butée axiale de limitation en déplacement du manchon 9 le long dudit arbre 3 de sortie dans le sens d'un écartement de la partie 8 active d'embrayage du manchon 9 de l'élément 6 menant.

Dans l'exemple représenté, notamment aux figures 5 et 6, le manchon 9 est intérieurement rainuré longitudinalement et est monté solidaire en rotation de l'arbre 3 de sortie par l'intermédiaire de deux goupilles traversant chacune l'arbre 3 de sortie. Chaque extrémité de chaque goupille s'insère à coulissement dans une rainure longitudinale interne du manchon. L'une des goupilles, qui constitue l'un des organes 14 de liaison entre l'arbre 3 de sortie et le manchon 9, forme une butée de limitation en déplacement axial du manchon 9 le long de l'arbre 3 de sortie dans le sens d'un écartement de l'élément 6 menant. L'arbre 3 de sortie est lui-même maintenu fixe axialement sur le châssis de l'engin, comme illustré à la figure 5. En variante, le manchon aurait pu être intérieurement rainuré longitudinalement et monté solidaire en rotation de l'arbre de sortie par l'intermédiaire d'une paire de cavaliers solidaires de l'arbre de sortie, les cavaliers s'insérant à coulissement dans une rainure longitudinale interne du manchon.

Le manchon 9 est muni d'un épaulement 92 circonférentiel interne positionnable en contact d'appui contre la ou l'une des paires de cavaliers, ou contre la ou l'une des goupilles à l'état monté du manchon 9 sur l'arbre 3 de sortie. Cette paire de cavaliers ou cette goupille forme une butée axiale de limitation en déplacement du manchon 9 le long dudit arbre 3 de sortie, dans le sens d'un écartement de l'élément mené de l'élément menant.

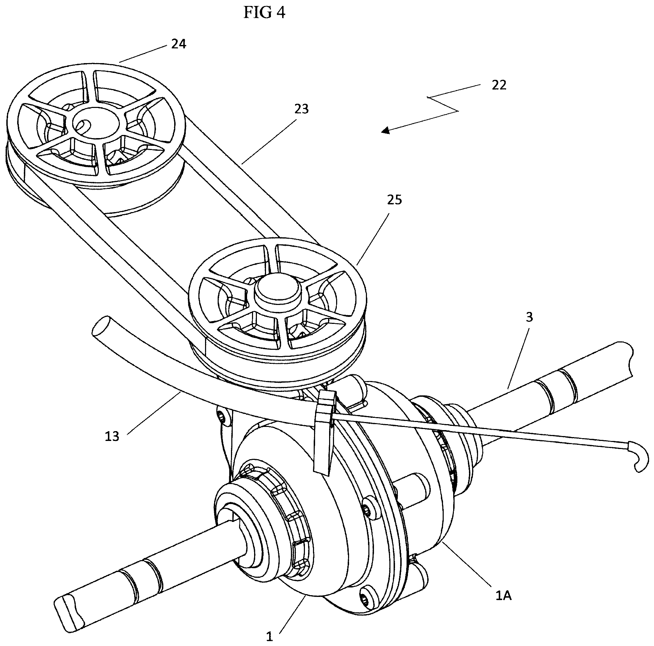

Dans les exemples des figures 4 à 9b, l'élément 6 menant de l'embrayage 5 est monté, sur l'arbre 3 de sortie, libre à rotation et déplaçable axialement le long dudit arbre 3 de sortie.

L'embrayage 5 des figures 5 et 6 est un mécanisme d'embrayage par crabotage. L'élément 6 menant est une roue dentée montée libre à rotation et déplaçable axialement le long de l'arbre 3 de sortie. Cette roue dentée est munie, sur sa face en regard de l'élément 7 mené, de dents. Cette roue dentée est en prise par engrènement avec une vis sans fin qui forme l'arbre d'entrée du boîtier 1.

La partie 8 active de l'élément 7 mené est quant à elle formée par un plateau entourant le manchon 9. Ce plateau est muni, sur sa face en regard de la roue dentée, de dents destinées à coopérer avec les dents de la roue dentée, en position embrayée de l'embrayage 5. L'entraînement en déplacement à coulissement du corps 1A de boîtier entraîne donc, dans ce mode de réalisation, le rapprochement de la roue dentée du plateau à dents. Un ressort 121 disposé entre les faces en regard du plateau et de la roue dentée rappelle la roue dentée et, par suite, le corps 1A de boîtier en position écartée du plateau à dents, correspondant à la position débrayée de l'embrayage 5.

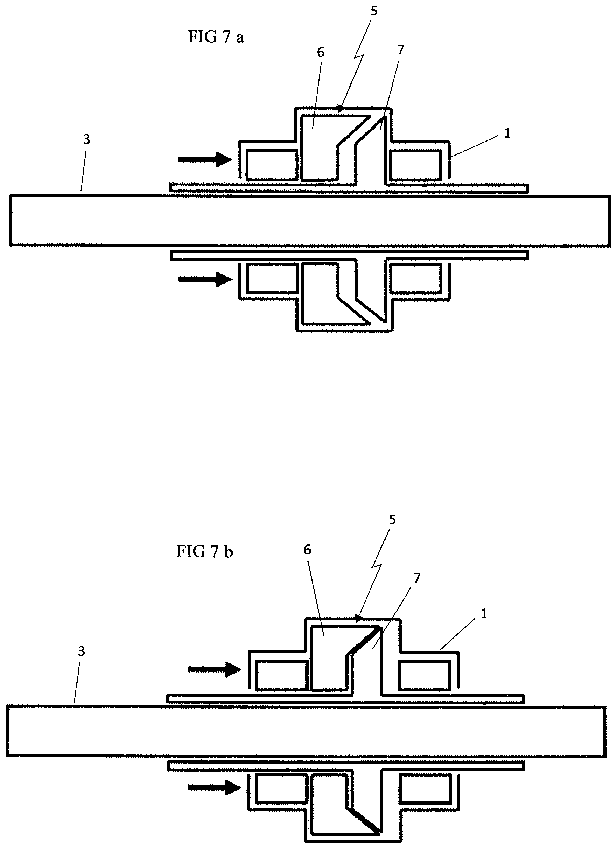

Les figures 7a et 7b illustrent un fonctionnement similaire de l'embrayage 5. L'embrayage 5 est dans ce cas un embrayage à cônes, avec l'élément 6 menant formé d'une roue dentée présentant intérieurement une partie conique dite femelle, et l'élément 7 mené formé, au niveau de sa partie 8 active, d'un cône constituant une partie mâle apte à venir s'insérer dans la partie conique femelle de la roue dentée en position embrayée de l'embrayage 5 correspondant à la position rapprochée de l'élément 6 menant de l'élément 7 mené.

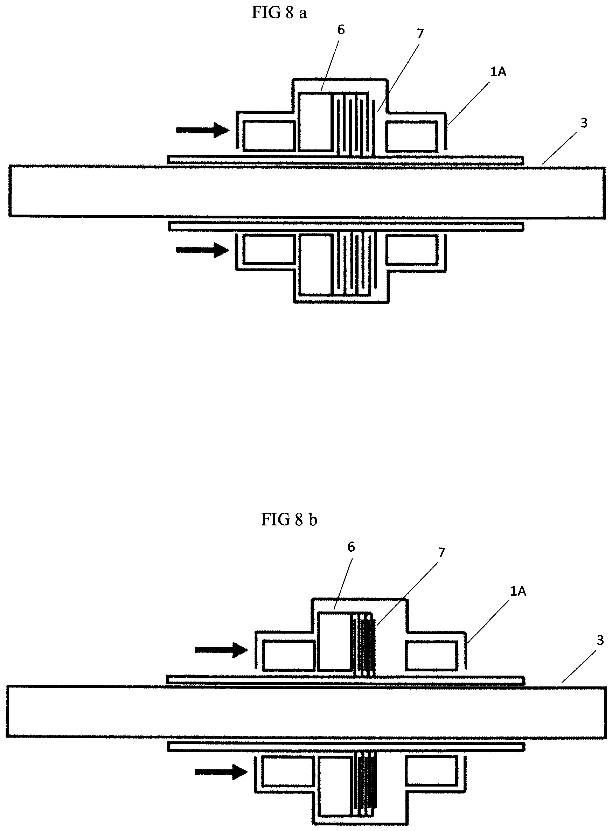

Les figures 8a et 8b illustrent également un fonctionnement similaire de l'embrayage 5. L'embrayage 5 est dans ce cas un embrayage à disques, avec l'élément menant formé d'une roue dentée solidaire en déplacement d'une pluralité de disques aptes à coopérer par contact d'appui avec une série de disques formant la partie active de l'élément mené.

On note que dans ces modes de réalisation, le manchon 9 fait partiellement saillie du corps de boîtier à l'état monté du manchon sur l'arbre de sortie.

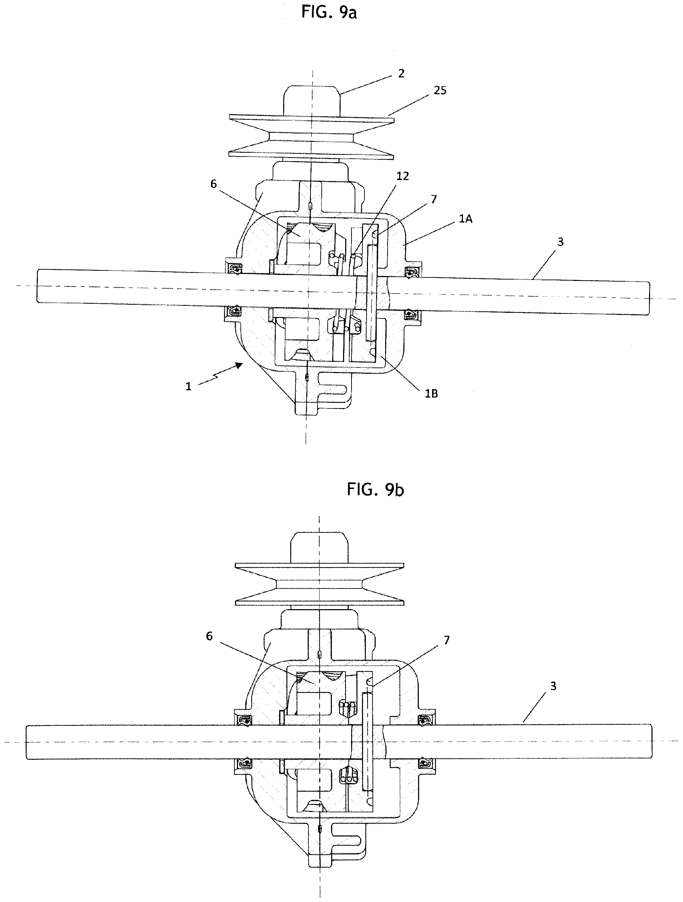

Enfin, les figures 9a et 9b illustrent une version simplifiée d'un embrayage par crabotage, où l'élément 6 menant est une roue dentée à dents conformément aux figures 5 et 6, qui est disposée autour de l'arbre de sortie, sans interposition du manchon de l'élément mené, comme dans les figures 5 et 6. Dans ce cas, l'élément 7 mené est un simple plateau à dents évidé centralement pour pouvoir être enfilé sur l'arbre 3 de sortie. Cet élément 7 mené est rendu solidaire en rotation de l'arbre 3 de sortie, et limité en déplacement axial le long de l'arbre de sortie, par exemple par goupillage.

Indépendamment du mode de réalisation de l'embrayage, le fonctionnement est toujours le même pour le passage de la position débrayée à la position embrayée de l'embrayage 5. L'opérateur actionne l'organe 13 de manœuvre, qui entraîne un déplacement à coulissement du corps 1A de boîtier le long de l'arbre de sortie, dans le sens d'un rapprochement de l'élément 6 menant de l'élément 7 mené. Des moyens 12 élastiquement déformables rappellent l'élément 6 menant et le corps 1A de boîtier en position écartée de l'élément 7 mené, cette position écartée correspondant à la position débrayée de l'embrayage 5.

## Revendications

1. Boîtier (1) de transmission comprenant :
- un corps (1A) de boîtier délimitant une enceinte (1B),
- un arbre (2) d'entrée
- un arbre (3) de sortie,
- un mécanisme (4) de transmission du mouvement de l'arbre (2) d'entrée à l'arbre (3) de sortie, ce mécanisme (4) de transmission du mouvement comprenant au moins un embrayage (5), et,
- un dispositif (10) de commande d'embrayage (5),
l'arbre (2) d'entrée, l'arbre (3) de sortie, et le mécanisme (4) de transmission du mouvement de l'arbre (2) d'entrée à l'arbre (3) de sortie étant logés au moins partiellement à l'intérieur de l'enceinte (1B) du corps (1A) de boîtier, l'embrayage (5) comprenant un élément (6) menant et un élément (7) mené monté solidaire en rotation de l'arbre (3) de sortie et limité en déplacement axial suivant au moins une direction le long de l'arbre (3) de sortie, le dispositif (10) de commande d'embrayage (5) comprenant un organe (11) de commande en rapprochement de l'élément (6) menant et de l'élément (7) mené pour le passage de l'embrayage (5) de la position débrayée à la position embrayée, **caractérisé en ce que** l'organe (11) de commande en rapprochement de l'élément (6) menant et de l'élément (7) mené pour le passage de l'embrayage (5) de la position débrayée à la position embrayée est formé par le corps (1A) de boîtier monté déplaçable à coulissement le long de l'arbre (3) de sortie.

2. Boîtier (1) selon la revendication 1, **caractérisé en ce que** le corps (1A) de boîtier est configuré pour, au cours de son déplacement à coulissement le long de l'arbre (3) de sortie suivant une direction correspondant au passage de l'embrayage (5) de la position débrayée à la position embrayée, entraîner en déplacement l'élément (6) menant dans le sens d'un rapprochement de l'élément (7) mené.

3. Boîtier (1) selon l'une des revendications 1 ou 2, **caractérisé en ce que** l'embrayage (5) comprend des moyens (12) de rappel de l'élément (6) menant et de l'élément (7) mené dans le sens d'un écartement l'un de l'autre , et **en ce que** le corps (1A) de boîtier est configuré pour, au cours de son déplacement à coulissement le long de l'arbre (3) de sortie suivant une direction correspondant au passage de l'embrayage (5) de la position débrayée à la position embrayée, entraîner en déplacement l'élément (6) menant dans le sens d'un rapprochement de l'élément (7) mené, à l'encontre des moyens (12) de rappel.

4. Boîtier (1) selon l'une des revendications 1 à 3, **caractérisé en ce que** le dispositif (10) de commande d'embrayage (5) comprend un organe (13) de manœuvre de l'organe (11) de commande en rapprochement de l'élément (6) menant et de l'élément (7) mené couplable au corps (1A) de boîtier, et **en ce que** le corps (1A) de boîtier formant l'organe (11) de commande en rapprochement de l'élément (6) menant et de l'élément (7) mené est déplaçable à coulissement le long de l'arbre (3) de sortie suivant une direction correspondant au passage de l'embrayage (5) de la position débrayée à la position embrayée sous l'action d'une traction ou d'une poussée exercée sur ledit organe (13) de manœuvre, à l'état couplé de l'organe (13) de manœuvre au corps (1A) de boîtier.

5. Boîtier (1) selon l'une des revendications 1 à 4, **caractérisé en ce que** l'élément (7) mené de l'embrayage (5) comprend une partie (8) active d'embrayage et un manchon (9) qui porte la partie (8) active d'embrayage , la partie (8) active d'embrayage étant en contact d'appui avec l'élément (6) menant de l'embrayage (5) en position embrayée de l'embrayage (5), le manchon (9) étant coaxial à l'arbre (3) de sortie, et solidaire en rotation de l'arbre (3) de sortie et l'élément (6) menant étant monté déplaçable à coulissement le long du manchon (9).

6. Boîtier (1) selon la revendication 5, **caractérisé en ce que** le manchon (9) et la partie (8) active d'embrayage sont réalisés d'une seule pièce.

7. Boîtier (1) selon l'une des revendications 5 ou 6, **caractérisé en ce que** le manchon (9) est intérieurement, rainuré longitudinalement, et est monté solidaire en rotation de l'arbre (3) de sortie par l'intermédiaire d'au moins un organe (14) de liaison monté, de préférence, de manière amovible sur l'arbre (3) de sortie, cet organe (14) de liaison faisant saillie radialement dudit arbre (3) de sortie, chaque partie (141) radiale externe à l'arbre (3) de sortie dudit organe (14) de liaison s'insérant à coulissement dans une rainure (91) longitudinale interne du manchon (9).

8. Boîtier (1) selon la revendication 7, **caractérisé en ce que** le manchon (9) est muni d'un épaulement (92) circonférentiel interne positionnable en contact d'appui contre chaque partie (141) radiale externe à l'arbre (3) de sortie dudit organe (14) de liaison à l'état monté du manchon (9) sur l'arbre (3) de sortie, chaque partie (141) radiale externe à l'arbre (3) de sortie dudit organe (14) de liaison formant une butée axiale de limitation en déplacement du manchon (9) le long dudit arbre (3) de sortie dans le sens d'un écartement de la partie (8) active d'embrayage du manchon (9) de l'élément (6) menant.

9. Boîtier (1) selon l'une des revendications 5 à 8, **caractérisé en ce que** le manchon (9) fait partiellement saillie du corps (1A) de boîtier, à l'état monté du manchon (9) sur l'arbre (3) de sortie.

10. Boîtier (1) selon l'une des revendications 1 à 9, **caractérisé en ce que** l'élément (6) menant de l'embrayage (5) est un élément rotatif apte à être entrainé en rotation par l'arbre (2) d'entrée, cet élément (6) menant de l'embrayage (5) étant monté libre en rotation par rapport à l'arbre (3) de sortie en position débrayée de l'embrayage (5).

11. Boîtier (1) selon l'une des revendications 1 à 10, **caractérisé en ce que** l'embrayage (5) est un embrayage (5) non progressif, de préférence à crabotage, ou un embrayage (5) progressif, de préférence à cônes ou à disques.

12. Engin (20) roulant comprenant un moteur (21), un boîtier (1) de transmission comprenant, un corps (1A) de boîtier délimitant une enceinte (1B), et logés au moins partiellement à l'intérieur de l'enceinte (1B) de boîtier, un arbre (2) d'entrée, un arbre (3) de sortie d'entrainement des roues de l'engin (20) et un mécanisme (4) de transmission du mouvement de l'arbre (2) d'entrée à l'arbre (3) de sortie, le mécanisme (4) de transmission de mouvement comprenant au moins un embrayage (5), l'embrayage (5) comprenant un élément (6) menant mobile et un élément (7) mené monté solidaire en rotation de l'arbre (3) de sortie et limité en déplacement axial suivant au moins une direction le long de l'arbre (3) de sortie, ledit boîtier (1) comprenant en outre un dispositif (10) de commande d'embrayage (5), le dispositif (10) de commande d'embrayage (5) comprenant un organe (11) de commande en rapprochement de l'élément (6) menant et de l'élément (7) mené pour le passage de l'embrayage (5) de la position débrayée à la position embrayée, ledit engin (20) roulant comprenant en outre des moyens (22) de transmission sans fin entre le moteur (21) et l'arbre (2) d'entrée du boîtier (1) de transmission **caractérisé en ce que** le boîtier (1) est conforme à l'une des revendications 1 à 11.

13. Engin (20) selon la revendication 12, **caractérisé en ce que** les moyens (22) de transmission sans fin comprennent une transmission sans fin à courroie (23) entre une poulie (24) motrice montée sur le moteur (21) et une poulie (25) menée portée par l'arbre (2) d'entrée du boîtier (1) de transmission et **en ce que** le corps (1A) de boîtier est monté oscillant autour de l'arbre (3) de sortie dans le sens d'une tension, ou respectivement d'un relâchement, de la courroie (23) de la transmission.

## Patentansprüche

1. Getriebegehäuse (1), umfassend:
- einen Gehäusekörper (1A), der ein Behältnis (1B) begrenzt,
- eine Eingangswelle (2),
- eine Ausgangswelle (3),
- einen Übertragungsmechanismus (4) der Bewegung der Eingangswelle (2) an die Ausgangswelle (3), wobei dieser Übertragungsmechanismus (4) der Bewegung mindestens eine Kupplung (5) umfasst, und
- eine Steuervorrichtung (10) der Kupplung (5),
wobei die Eingangswelle (2), die Ausgangswelle (3) und der Übertragungsmechanismus (4) der Bewegung der Eingangswelle (2) an die Ausgangswelle (3) mindestens teilweise im Inneren des Behältnisses (1B) des Gehäusekörpers (1A) untergebracht sind, wobei die Kupplung (5) ein führendes Element (6) und ein geführtes Element (7) umfasst, das mit der Ausgangswelle (3) rotatorisch fest verbunden angebracht und in axialer Verlagerung gemäß mindestens einer Richtung entlang der Ausgangswelle (3) begrenzt ist, wobei die Steuervorrichtung (10) der Kupplung (5) ein Steuerorgan (11) zwecks Annäherung des führenden Elements (6) und des geführten Elements (7) für den Wechsel der Kupplung (5) aus der ausgekuppelten Position in die eingekuppelte Position umfasst, **dadurch gekennzeichnet, dass** das Steuerorgan (11) zwecks Annäherung des führenden Elements (6) und des geführten Elements (7) für den Wechsel der Kupplung (5) aus der ausgekuppelten Position in die eingekuppelte Position von dem Gehäusekörper (1A) gebildet ist, der gleitend verlagerbar entlang der Ausgangswelle (3) angebracht ist.

2. Gehäuse (1) nach Anspruch 1, **dadurch gekennzeichnet, dass** der Gehäusekörper (1A) ausgelegt ist, damit während seiner gleitenden Verlagerung entlang der Ausgangswelle (3) gemäß einer Richtung, die dem Wechsel der Kupplung (5) aus der ausgekuppelten Position in die eingekuppelte Position entspricht, das führende Element (6) in Richtung einer Annäherung an das geführte Element (7) verlagernd bewegt wird.

3. Gehäuse (1) nach einem der Ansprüche 1 oder 2, **dadurch gekennzeichnet, dass** die Kupplung (5) Rückstellmittel (12) des führenden Elements (6) und des geführten Elements (7) in Richtung einer Beabstandung voneinander umfasst und dass der Gehäusekörper (1A) ausgelegt ist, um während seiner gleitenden Verlagerung entlang der Ausgangswelle (3) gemäß einer Richtung, die dem Wechsel der Kupplung (5) aus der ausgekuppelten Position in die eingekuppelte Position entspricht, das führende Element (6) in Richtung einer Annäherung an das geführte Element (7) den Rückstellmitteln entgegen (12) verlagernd anzutreiben.

4. Gehäuse (1) nach einem der Ansprüche 1 bis 3, **dadurch gekennzeichnet, dass** die Steuervorrichtung (10) der Kupplung (5) ein an den Gehäusekörper (1A) koppelbares Manövrierorgan (13) des Steuerorgans (11) zwecks Annäherung des führenden Elements (6) und des geführten Elements (7) umfasst und dass der Gehäusekörper (1A), der das Steuerorgan (11) zwecks Annäherung des führenden Elements (6) und des geführten Elements (7) bildet, gleitend entlang der Ausgangswelle (3) gemäß einer Richtung verlagerbar ist, die dem Wechsel der Kupplung (5) aus der ausgekuppelten Position in die eingekuppelte Position entspricht, unter der Wirkung eines Ziehens oder eines Drückens, das auf das Manövrierorgan (13) ausgeübt wird, im am Gehäusekörper (1A) gekoppelten Zustand des Manövrierorgans (13).

5. Gehäuse (1) nach einem der Ansprüche 1 bis 4, **dadurch gekennzeichnet, dass** das geführte Element (7) der Kupplung (5) einen aktiven Kupplungsteil (8) und eine Hülse (9) umfasst, die den aktiven Kupplungsteil (8) trägt, wobei der aktive Kupplungsteil (8) in Stützkontakt mit dem führenden Element (6) der Kupplung (5) in eingekuppelter Position der Kupplung (5) ist, wobei die Hülse (9) koaxial zur Ausgangswelle (3) und mit der Ausgangswelle (3) rotatorisch fest verbunden ist und das führende Element (6) gleitend verlangerbar entlang der Hülse (9) angebracht ist.

6. Gehäuse (1) nach Anspruch 5, **dadurch gekennzeichnet, dass** die Hülse (9) und der aktive Kupplungsteil (8) in einem einzigen Teil hergestellt sind.

7. Gehäuse (1) nach einem der Ansprüche 5 oder 6, **dadurch gekennzeichnet, dass** die Hülse (9) innen längs gerillt ist und mit der Ausgangswelle (3) über mindestens ein Verbindungsorgan (14) rotatorisch fest verbunden angebracht ist, das vorzugsweise lösbar auf der Ausgangswelle (3) angebracht ist, wobei dieses Verbindungsorgan (14) aus der Ausgangswelle (3) radial hervorragt, wobei jeder zur Ausgangswelle (3) äußere radiale Teil (141) des Verbindungsorgans (14) in eine innere Längsrille (91) der Hülse (9) hineingleitet.

8. Gehäuse (1) nach Anspruch 7, **dadurch gekennzeichnet, dass** die Hülse (9) mit einem inneren Umfangsabsatz (92) ausgestattet ist, der in Stützkontakt auf jedem zur Ausgangswelle (3) des Verbindungsorgans (14) äußeren radialen Teil (141) im auf der Ausgangswelle (3) angebrachten Zustand der Hülse (9) positionierbar ist, wobei jeder zur Ausgangswelle (3) des Verbindungsorgans (14) äußere radiale Teil (141) einen axialen Begrenzungsanschlag für die Verlagerung der Hülse (9) entlang der Ausgangswelle (3) in Richtung einer Beabstandung des aktiven Kupplungsteils (8) der Hülse (9) vom führenden Element (6) bildet.

9. Gehäuse (1) nach einem der Ansprüche 5 bis 8, **dadurch gekennzeichnet, dass** die Hülse (9) im auf der Ausgangswelle (3) angebrachten Zustand der Hülse (9) teilweise aus dem Gehäusekörper (1A) hervorragt.

10. Gehäuse (1) nach einem der Ansprüche 1 bis 9, **dadurch gekennzeichnet, dass** das führende Element (6) der Kupplung (5) ein rotierendes Element ist, das imstande ist, von der Eingangswelle (2) rotatorisch angetrieben zu sein, wobei dieses führende Element (6) der Kupplung (5) in Bezug auf die Ausgangswelle (3) in ausgekuppelter Position der Kupplung (5) frei rotierend angebracht ist.

11. Gehäuse (1) nach einem der Ansprüche 1 bis 10, **dadurch gekennzeichnet, dass** die Kupplung (5) eine nicht progressive Kupplung (5), vorzugsweise mit Klauen, oder eine progressive Kupplung (5), vorzugsweise mit Konen oder mit Scheiben, ist.

12. Radfahrzeug (20), umfassend einen Motor (21), ein Getriebegehäuse (1), umfassend einen Gehäusekörper (1A), der ein Behältnis (1B) begrenzt und, mindestens teilweise im Inneren des Behältnisses (1B) des Gehäuses untergebracht, eine Eingangswelle (2), eine Ausgangswelle (3) zum Antreiben der Räder des Fahrzeugs (20) und einen Übertragungsmechanismus (4) der Bewegung der Eingangswelle (2) an die Ausgangswelle (3), wobei der Übertragungsmechanismus (4) der Bewegung mindestens eine Kupplung (5) umfasst, wobei die Kupplung (5) ein bewegliches führendes Element (6) und ein geführtes Element (7) umfasst, das mit der Ausgangswelle (3) rotatorisch fest verbunden angebracht und in axialer Verlagerung gemäß mindestens einer Richtung entlang der Ausgangswelle (3) begrenzt ist, wobei das Gehäuse (1) ferner eine Steuervorrichtung (10) der Kupplung (5) umfasst, wobei die Steuervorrichtung (10) der Kupplung (5) ein Steuerorgan (11) zwecks Annäherung des führenden Elements (6) und des geführten Elements (7) für den Wechsel der Kupplung (5) aus der ausgekuppelten Position in die eingekuppelte Position umfasst, wobei das Radfahrzeug (20) ferner Endlosübertragungsmittel (22) zwischen dem Motor (21) und der Eingangswelle (2) des Getriebegehäuses (1) umfasst, **dadurch gekennzeichnet, dass** das Gehäuse (1) nach einem der Ansprüche 1 bis 11 ist.

13. Fahrzeug (20) nach Anspruch 12, **dadurch gekennzeichnet, dass** die Endlosübertragungsmittel (22) eine Riemenendlosübertragung (23) zwischen einer Antriebsrolle (24), die auf dem Motor (21) angebracht ist, und einer geführten Rolle (25), die von der Eingangswelle (2) des Gehäuses (1) getragen wird, umfassen, und dass der Gehäusekörper (1A) schwingend um die Ausgangswelle (3) in Richtung einer Spannung oder beziehungsweise eines Lockerns des Riemens (23) der Übertragung angebracht ist.

## Claims

1. A transmission housing (1) comprising:
- a housing body (1A) delimiting an enclosure (1B),
- an input shaft (2),
- an output shaft (3),
- a mechanism (4) for transmitting movement from the input shaft (2) to the output shaft (3), this movement transmission mechanism (4) comprising at least one clutch (5), and
- a device (10) for controlling the clutch (5),
the input shaft (2), the output shaft (3), and the mechanism (4) for transmitting movement from the input shaft (2) to the output shaft (3) being housed at least partially inside the enclosure (1B) of the housing body (1A), the clutch (5) comprising a driving element (6) and a driven element (7) mounted secured in rotation with the output shaft (3) and limited in axial movement along at least one direction along the output shaft (3), the device (10) for controlling the clutch (5) comprising a member (11) controlling the approach of the driving element (6) and of the driven element (7) for the passage of the clutch (5) from the disengaged position to the engaged position, **characterized in that** the member (11) for controlling the approach of the driving element (6) and of the driven element (7) for the passage of the clutch (5) from the disengaged position to the engaged position is formed by the housing body (1A) mounted slidingly movable along the output shaft (3).

2. The housing (1) according to claim 1, **characterized in that** the housing body (1A) is configured in order, during its sliding movement along the output shaft (3) in a direction corresponding to the passage of the clutch (5) from the disengaged position to the engaged position, to drive the movement of the driving element (6) in the direction of an approach of the driven element (7).

3. The housing (1) according to one of claims 1 or 2, **characterized in that** the clutch (5) comprises means (12) for returning the driving element (6) and the driven element (7) in the direction of a separation from one another, and **in that** the housing body (1A) is configured in order, during its sliding movement along the output shaft (3) in a direction corresponding to the passage of the clutch (5) from the disengaged position to the engaged position, to drive the movement of the driving element (6) in the direction of an approach of the driven element (7), against the return means (12).

4. The housing (1) according to one of claims 1 to 3, **characterized in that** the device (10) for controlling the clutch (5) comprises a member (13) for maneuvering the member (11) for controlling the approach of the driving element (6) and the driven element (7) able to be coupled to the housing body (1A), and **in that** the housing body (1A) forming the member (11) for controlling the approach of the driving element (6) and the driven element (7) is slidingly movable along the output shaft (3) in a direction corresponding to the passage of the clutch (5) from the disengaged position to the engaged position under the action of a pull or a push exerted on said maneuvering member (13), in the state of the maneuvering member (13) coupled to the housing body (1A).

5. The housing (1) according to one of claims 1 to 4, **characterized in that** the driven element (7) of the clutch (5) comprises an active clutch part (8) and a sleeve (9) which bears the active clutch part (8), the active clutch part (8) being in bearing contact with the driving element (6) of the clutch (5) in the engaged position of the clutch (5), the sleeve (9) being coaxial with the output shaft (3), and secured in rotation with the output shaft (3) and the driving element (6) being mounted slidingly movably along the sleeve (9).

6. The housing (1) according to claim 5, **characterized in that** the sleeve (9) and the active clutch part (8) are made in a single piece.

7. The housing (1) according to one of claims 5 or 6, **characterized in that** the sleeve (9) is inwardly longitudinally grooved, and is mounted secured in rotation with the output shaft (3) by means of at least one connecting member (14) mounted, preferably, removably on the output shaft (3), this connecting member (14) protruding radially from said output shaft (3), each radial part (141) external to the output shaft (3) of said connecting member (14) being slidingly inserted into an inner longitudinal groove (91) of the sleeve (9).

8. The housing (1) according to claim 7, **characterized in that** the sleeve (9) is provided with an inner circumferential shoulder (92) able to be positioned in bearing contact against each radial part (141) external to the output shaft (3) of said connecting member (14) in the state of said sleeve (9) mounted on the output shaft (3), each radial part (141) external to the output shaft (3) of said connecting member (14) forming an axial stop limiting the movement of the sleeve (9) along said output shaft (3) in the direction separating the active clutch part (8) of the sleeve (9) from the driving element (6).

9. The housing (1) according to one of claims 5 to 8, **characterized in that** the sleeve (9) protrudes partially from the housing body (1A), in the mounted state of the sleeve (9) on the output shaft (3).

10. The housing (1) according to one of claims 1 to 9, **characterized in that** the driving element (6) of the clutch (5) is a rotating element able to be driven in rotation by the input shaft (2), this driving element (6) of the clutch (5) being mounted freely rotating relative to the output shaft (3) in the disengaged position of the clutch (5).

11. The housing (1) according to one of claims 1 to 10, **characterized in that** the clutch (5) is a non-progressive clutch (5), preferably with dog-clutch, or a progressive clutch (5), preferably with cones or with discs.

12. A wheeled vehicle (20) comprising a motor (21), a transmission housing (1) comprising a housing body (1A) delimiting an enclosure (1B), and housed at least partially inside the housing enclosure (1B), an input shaft (2), an output shaft (3) driving the wheels of the vehicle (20) and a mechanism (4) for transmitting the movement from the input shaft (2) to the output shaft (3), the mechanism (4) for transmitting movement comprising at least one clutch (5), the clutch (5) comprising a movable driving element (6) and a driven element (7) mounted secured in rotation with the output shaft (3) and limited in axial movement in at least one direction along the output shaft (3), said housing (1) further comprising a device (10) for controlling the clutch (5), the device (10) for controlling the clutch (5) comprising a member (11) for controlling the approach of the driving element (6) and the driven element (7) for the passage of the clutch (5) from the disengaged position to the engaged position, said wheeled vehicle (20) further comprising endless transmission means (22) between the motor (21) and the input shaft (2) of the transmission housing (1), **characterized in that** the housing (1) is according to one of claims 1 to 11.

13. The vehicle (20) according to claim 12, **characterized in that** the endless transmission means (22) comprise an endless belt transmission (23) between a driving pulley (24) mounted on the motor (21) and a driven pulley (25) carried by the input shaft (2) of the transmission housing (1) and **in that** the housing body (1A) is mounted oscillating about the output shaft (3) in the direction of a tension, or respectively of a release, of the belt (23) of the transmission.
